# EUROPEAN PATENT SPECIFICATION

(11) **EP 1 953 285 B1**
(45) Date of publication and mention of the grant of the patent: **03.09.2014**
(21) Application number: 06822980.6
(22) Date of filing: 30.10.2006
(51) Int. Cl.: D04B 35/00, D02G 3/04, G06T 11/60

(54) **IMAGE SIMULATION DEVICE AND METHOD OF MELANGE YARN AND PROGRAM**
BILDSIMULIERUNGSVORRICHTUNG UND VERFAHREN FÜR MELANGEGARN UND PROGRAMM
DISPOSITIF DE SIMULATION D'IMAGE ET PROCEDE POUR FIL CHINE ET PROGRAMME

(30) Priority: 04.11.2005 JP 2005320632
(43) Date of publication of application: 06.08.2008
(73) Proprietor: Shima Seiki Manufacturing., Ltd., Wakayama-shi, Wakayama 6410003 (JP)
(72) Inventor: MAKINO, Takashi, Wakayama 641-0003 (JP)
(74) Representative: Wagner, Karl H.
(86) International application number: PCT/JP2006/322066
(87) International publication number: WO 2007/052783

(56) References cited:
- WO-A1-2004/051519
- WO-A1-2005/121422
- JP-A- 06 301 773
- JP-A- 2006 184 115
- JP-B2- 03 027 948
- US-A- 5 680 333
- FUJITSU S.: 'Family Designer's Workbench Shiyo Tebikisho (Textile Designer Shien System)', 1995 pages 65 - 80, XP003012522
- OHTA K. ET AL.: 'Ito Hyomen Database o Mochiita Orimono Hyomen Pattern Simulation' JOURNAL OF THE TEXTILE MACHINERY SOCIETY OF JAPAN vol. 43, no. 12, 1990, pages T.1111 - T.1119, XP002977637

## Description

### TECHNICAL FIELD

The present invention relates to the simulation of a yarn image of mélange yarn, from a fabric in which mélange yarn is used.

### BACKGROUND ART

Mélange yarn is obtained by mixing a plurality of fibers of different colors. Yarn with a unique aspect can be obtained by selecting an appropriate combination of colors of fibers. The color and ratio of each of the fibers constituting mélange yarn are called "recipe."

In the apparel industries, a sample of a small fabric having mélange yarn is used for planning products and ordering mélange yarn. However, an apparel product, such as a garment in which mélange yarn is used, cannot be simulated with the fabric sample. Therefore, there is a difference between a sample fabric of mélange yarn and an actual product.

A yarn image of mélange yarn is required to simulate an apparel product, but it is not easy to create a yarn image from a sample fabric. For example, it is difficult to empirically obtain a recipe for mélange yarn or a color spectrum of yarn from a sample fabric. Unraveling the sample fabric to read an image of knitting yarn thereof is possible, but such work requires effort and the sample fabric might be disassembled.

### DISCLOSURE OF THE INVENTION

An object of the present invention is to obtain a yarn image of mélange yarn without unraveling a fabric in which mélange yarn is used and such as to keep the characteristics of colors of the mélange yarn.

An additional object of the present invention is to limit the number of unit colors constituting a color spectrum of the mélange yarn to a reasonable number.

A yet additional object of the present invention is to keep the characteristics of the colors of the mélange yarn during a step of merging unit colors.

An image simulation device of mélange yarn according to the present invention is a device for creating a color image to simulate mélange yarn from a fabric knitted from the mélange yarn, the device being provided with: means for reading out a color image of the fabric; histogram creating means for creating, from the color image, a histogram configured by color values and occurrence frequencies of a plurality of unit colors of a color space; spice color extracting means for extracting, from the plurality of unit colors of the created histogram, spice colors of medium brightness, high saturation and different hues, and segmenting other unit colors from normal colors; merging means for merging the normal colors to reduce the number of normal colors, and obtaining a color value and an occurrence frequency of each of the spice colors and a color value and an occurrence frequency of each of the normal colors, as a mélange yarn color spectrum; and yarn image creating means for creating a yarn image of the mélange yarn such that the color values of the spice colors and the normal colors in the mélange yarn color spectrum are displayed in relation to the respective occurrence frequencies thereof and that the color values are disposed in the form of elongated fibers.

Preferably, the color space is divided into a plurality of groups, the histogram creating means segments pixels of the color image into the groups, an average value of color values of the pixels belonging to each group is obtained as the unit color, and an occurrence frequency of the unit color is defined based on the number of pixels belonging to each group.

More preferably, the merging means merges a less-frequently occurring normal color with other neighboring normal color or spice color within the color space, and merges the normal color with other normal color having a small color difference and similar color value therewith or with a spice color having a small color difference and similar color value therewith.

Particularly preferably, the merging means processes two spice colors, which have a small color difference therebetween and similar color values, such as to give priority to the color value of the spice color that is remote from an average color value of the histogram, to reduce the number of spice colors.

More preferably, the device is further provided with correction means for obtaining a shift amount by which the average color value of the mélange yarn color spectrum that is obtained by the merging means is shifted from an average color value of the color image, shifting the color values of the spice colors and the normal colors by the shift amount, and matching the average color value of the mélange yarn color spectrum with the average color value of the color image.

An image simulation method of mélange yarn according to the present invention has the steps of: acquiring a color image of a fabric knitted from mélange yarn; creating, from the color image, a histogram configured by color values and occurrence frequencies of a plurality of unit colors of a color space; extracting, from the plurality of unit colors of the created histogram, spice colors of medium brightness, high saturation and different hues, and segmenting other unit colors from normal colors; merging the normal colors to reduce the number of normal colors, and obtaining a color value and an occurrence frequency of each of the spice colors and a color value and an occurrence frequency of each of the normal colors as a mélange yarn color spectrum; and creating a yarn image of the mélange yarn such that the color values of the spice colors and the normal colors in the mélange yarn color spectrum are displayed in relation to the respective occurrence frequencies thereof and that the color values are disposed in the form of elongated fibers.

Preferably, the color space is divided into a plurality of groups, pixels of the color image are segmented into the groups when creating the histogram, an average value of color values of the pixels belonging to each group is obtained as the unit color, an occurrence frequency of the unit color is defined based on the number of pixels belonging to each group, a less-frequently occurring normal color is merged with other neighboring normal color or spice color within the color space, and the normal color is merged with other normal color having a small color difference and similar color value therewith or with a spice color having a small color difference and similar color value therewith, when merging the normal colors.

An image simulation program of mélange yarn according to the present invention is a program of a device for creating a color image to simulate mélange yarn from a fabric knitted from the mélange yarn, the program being provided with: a histogram creating command to create, from a color image of a fabric knitted from mélange yarn, a histogram configured by color values and occurrence frequencies of a plurality of unit colors of a color space; a spice color extracting command to extract, from the plurality of unit colors of the created histogram, spice colors of medium brightness, high saturation and different hues, and segment other unit colors from normal colors; a merging command to merge the normal colors to reduce the number of normal colors, and obtain a color value and an occurrence frequency of each of the spice colors and a color value and an occurrence frequency of each of the normal colors as a mélange yarn color spectrum; and a yarn image creating command to create a yarn image of the mélange yarn such that the color values of the spice colors and the normal colors in the mélange yarn color spectrum are displayed in relation to the respective occurrence frequencies thereof and that the color values are disposed in the form of elongated fibers.

Preferably, the color space is divided into a plurality of groups, the histogram creating command segments pixels of the color image into the groups, obtains an average value of color values of the pixels belonging to each group, as the unit color, defines an occurrence frequency of the unit color based on the number of pixels belonging to each group, and the merging command merges a less-frequently occurring normal color with other neighboring normal color or spice color within the color space, and merges the normal color with other normal color having a small color difference and similar color value therewith or with a spice color having a small color difference and similar color value therewith.

In the present invention, a color image of a fabric in which mélange yarn is used is sorted into histograms, and a characteristic color in the colors of the mélange yarn is extracted as a spice color. There are generally a plurality of spice colors in one type of mélange yarn, and these spice colors are not unit colors of high occurrence frequency. Spice colors are of medium brightness and high saturation and are distinct so as to enhance the characteristics of the colors of the mélange yarn. Hues of the spice colors are made different from one another and, for example, divided into a plurality of areas, and a spice color candidate is searched for each area. Here, preferably, unit colors of at least a predetermined frequency value, for example, are taken as the spice colors so that noise in the color image is not extracted. Unit colors other than the spice colors are called "normal colors." When there are a large number of normal colors, it becomes difficult to handle the color image, and less-frequently occurring normal colors have an insignificant visual effect. Therefore, the normal colors are merged to reduce the number thereof, and the remaining normal colors and the spice colors are used for configuring a mélange yarn color spectrum. By allocating the obtained color spectrum to each fiber of the mélange yarn, a yarn image of the mélange yarn is obtained, and an apparel product such as a sweater can be simulated using this yarn image.

As a result, a product in which mélange yarn is used can be simulated without unraveling the sample fabric of mélange yarn or empirically estimating the recipe for mélange yarn. Meanwhile, a fabric in which mélange yarn is used needs to be input manually using a scanner or the like, but the yarn image can be obtained almost automatically.

Here, the number of unit colors can be limited from the beginning by dividing the color space into a plurality of groups and then creating a histogram based on the average value of color values of the image belonging to each group. Also, the aspect of the mélange yarn is defined by a combination of fibers of different hues, brightness and saturation levels, and there is not much difference in the visual aspect of the mélange yarn even when the fibers of similar color values are regarded as the same fibers.

The number unit colors can be reduced by merging a less-frequently occurring normal color with other normal color or spice color having a similar color value, and by merging two types of unit colors having a small color difference therebetween. In this case, when merging the normal color with the spice color, priority is given to the color value of the spice color. Specifically, these colors are merged so as to obtain a color whose color value is closer to the color value of the original spice color than that of a simple average. In this manner, the number of unit colors is reduced while keeping the characteristics of the colors of the mélange yarn.

When there are a large number of spice colors, two spice colors may be merged or one of them may be changed to the normal color on condition that the color difference therebetween is small, i.e., on condition that two spice colors of similar color values do not have to be remained. In this case, priority is given to the color value of the spice color that is remote from the average color value of the histogram. The reason is that the spice colors stand out beyond the average color of the mélange yarn, and are striking colors due to the medium brightness and high saturation thereof. The spice color whose color value is close to the average color value is changed to, for example, the normal color. Moreover, for example, the color value of the pixels belonging to the spice color whose color value is close to the average color value may be replaced with the color value of the spice color that is remote from the average color value.

During a step of repeatedly merging unit colors, the average color of the color spectrum is sometimes shifted from the average color of the sample fabric. By obtaining and correcting this shift amount, the average color of the color spectrum can be prevented from shifting from the average color of the sample fabric.

Note that the color image may be read from the fabric by using, for example, a color scanner or a digital camera, and HLS (hue H, brightness L, saturation S), RGB

(red R, green G, blue B), LAB, LUB and the like may be used as the color values. When the brightness and the saturation are each expressed with, for example, an 8-bit value from 0 to 255, medium brightness may be defined as, for example, a value ranging from 64 to 192 or preferably 96 to 160, and high saturation may be defined as, for example, a value of 128 or higher, or preferably 192 or higher. However, in the case in which the maximum value of the brightness of a unit color is, for example, 62 and the maximum value of the saturation of the same is 82 with respect to a certain hue, these values indicate the medium brightness and the highest saturation with respect to this hue. Specifically, it is preferred that unit colors of medium brightness and high saturation be selected as the spice colors from among a plurality of unit colors of the same hue.

### BRIEF DESCRIPTION OF THE DRAWINGS

Fig. 1 is a block diagram of an image simulation device of mélange yarn according to an embodiment.
Fig. 2 is a flowchart showing a mélange yarn color spectrum calculation algorithm according to the embodiment.
Fig. 3 is a flowchart showing a yarn image creation algorithm.
Fig. 4 is a figure-substitute photograph showing an image obtained by reading a mélange fabric using a color scanner.
Fig. 5 is a diagram showing a yarn image of a mélange yarn created in the embodiment.
Fig. 6 is a diagram showing a fabric image simulated using the yarn image shown in Fig. 5.
Fig. 7 is a diagram showing a histogram of hues of the fabric read in the embodiment.
Fig. 8 is a diagram showing RGB values (top) and HLS values (bottom) of fifty unit colors extracted from the hue histogram shown in Fig. 7.
Fig. 9 is a diagram showing spice colors (boxed parts) and normal colors other than the spice colors, which are both extracted from the unit colors shown in Fig. 8.
Fig. 10 is a diagram showing five spice colors and eight normal colors that are obtained after merging less-frequent normal colors shown in Fig. 9 with neighboring normal colors or spice colors.
Fig. 11 is a diagram showing five spice colors and six normal colors that are obtained after merging normal colors and spice colors having a small color difference.
Fig. 12 is a diagram showing spice colors and normal colors that are obtained after correcting the average colors of the spice colors and of the normal colors shown in Fig. 11 such as to shift them to the average color of the scanned fabric.

### DESCRIPTIONS OF THE REFERENCE NUMERALS

- 2: Image simulation device
- 4: Bus
- 6: Color scanner
- 8: Histogram creating part
- 10: Spice color extracting part
- 12: Merging part
- 14: Color shift correcting part
- 16: Color spectrum storage
- 18: Sampling part
- 20: User input
- 22: Processing program
- 24: Yarn shape storage
- 26: Yarn shape sampling part
- 28: Yarn image creating part
- 30: Simulation part
- 32: Color monitor
- 34: Color printer
- 36: LAN interface
- 38: Disk drive

### BEST MODE FOR CARRYING OUT THE INVENTION

Best mode for carrying out the present invention will be described hereinafter. Embodiment

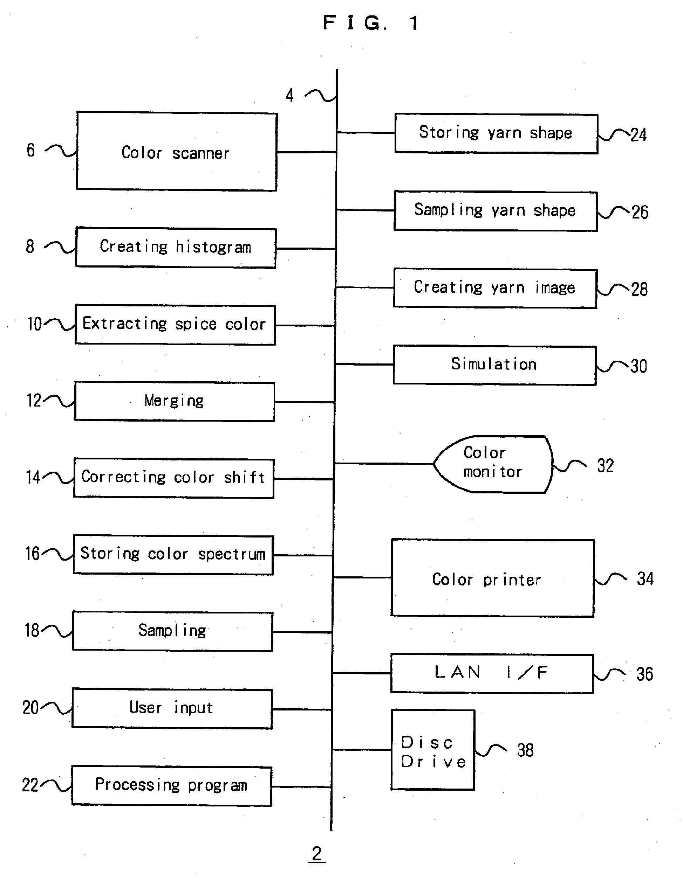

Fig. 1 through Fig. 12 show the embodiment. In the drawings, reference numeral 2 is an image simulation device, reference numeral 4 a bus, and reference numeral 6 a color scanner, which may be substituted with a digital camera, to read out a color image of a sample fabric knitted from mélange yarn. Reference numeral 8 is a histogram creating part for creating a histogram of the distribution of color values of the read color image. For example, when a color space to be used consists of HLS, and the color space is divided into 12 groups using the hue H, 8 groups using the brightness L and 8 groups using the saturation S, the whole color space is divided into 768 groups. Then, after an unnecessary section of the read color image is removed therefrom by means of a sampling part 18, the pixels of the color image are classified into 768 groups to create a histogram. The type of the color space to be used is arbitrary, and the number of groups to obtain by dividing the color space or the necessity of division into groups is also arbitrary. The colors within one group are regarded as similar colors, and the average color value of the colors of this group is taken as a group color value. Here, a group that is not empty is called "unit color," and most of the groups are empty.

A spice color extracting part 10 extracts a maximum of twelve spice colors from a maximum of 768 unit colors. Each spice color is defined for each hue, and, for example, the hues are classified into twelve groups, hence one or less spice color is extracted for each hue. The spice colors to be extracted are colors of medium brightness and high saturation among a maximum of sixty-four unit colors corresponding to one hue. When the maximum value of brightness or saturation is 255, for example, the spice color in which the value obtained by {(128 - L)² + (255 - S)²}^{1/2} is minimum is taken as the spice color of medium brightness and high saturation. Instead of using such a criterion, it is possible to prepare a table that describes an order of extracting the spice colors from sixty-four segments each consisting of a combination of brightness and saturation, in order to extract the spice colors based on the order described in the table. Note that the spice colors are not extracted from small groups having an occurrence frequency of a predetermined value or less, that is, from those groups having an occurrence frequency of 0.04% or less of the entire occurrence frequency. Of the plurality of unit colors obtained by the histogram creating part 8, the ones other tan the spice colors are called "normal colors." Data obtained at this stage are the color values and occurrence frequencies of the spice colors and the color values and occurrence frequencies of the normal colors. There are generally a plurality of spice colors and normal colors.

A merging part 12 merges similar normal colors or similar spice colors with each other or changes the spice colors to normal colors to simplify the color spectrum. Note that merging may be performed so as to reduce the number of normal colors only without reducing the number of spice colors. The merging part 12 merges a normal color having an occurrence frequency of, for example, 1% or less of the entire occurrence frequency with other proximate normal color or spice color in the color space that has the smallest color difference with the former normal color. The color difference here indicates the distance between these colors in the color space, and is defined by, for example, CIE (Commission Internationale de l'Eclairage) (CIE 1960 USC diagram). When merging the normal color having an occurrence frequency of 1% or less and when the color to be merged therewith is a spice color, the occurrence frequency of the spice color is increased without changing its color value. In the case in which two normal colors are merged, thus obtained new color value is taken as a weighted average of these normal colors, with the weight being the occurrence frequency thereof. The merging part 12 further merges two unit colors having a small color difference therebetween. Furthermore, one of two similar spice colors is released and changed to the normal color, and the spice color whose color value is close to the average color value of the histogram is changed to a normal color. Two spice colors having a small color difference therebetween may be merged into one, in which case the spice color whose color value is close to the average color value of the histogram is merged with the spice color whose color value is remote from the average color value of the histogram. In this manner, priority is given to the spice colors that are beyond the average of the histogram, to cut the number of spice colors.

In the case of merging a normal color with a spice color, for example, the color value of the normal color is ignored, the occurrence frequency of this normal color is added to the occurrence frequency of the spice color, and the color value of the spice color is saved. Also, in the case of merging two normal colors, thus obtained new color value is taken as a weighted average or the like of these normal colors. Through these processes, the number of unit colors is reduced from, for example, initial 50 through 100 or more to approximately 10. Because the spice colors have medium brightness and high saturation in the mélange yarn, the spice colors constitute a visually significant part even when it has low occurrence frequency. Although the image of mélange yarn tends to make a gaudy color tone with spice colors only, the normal colors constituting a substantial part of the histogram change it to a quiet color tone. Therefore, the spice color and the normal color are extracted separately, and the spice color is saved even when it has a low occurrence frequency without changing the color value of the extracted spice color during a merging step. In the case of reducing the number of spice colors, priority is given to the spice color whose color value is remote from the average color value of the histogram, i.e., the distinct spice color. Then, the number of unit colors is reduced to create the yarn image easily.

During a step of repeatedly merging unit colors, the average color value of the histogram is slightly shifted from the initial average color value of the histogram to an average color value of the histogram that is obtained after the merging. Here, a color shift correcting part 14 obtains a shift of the average color value of the histogram during the step of merging unit colors, inverts, for example, the code of the color value of the shift amount, and adds it to each unit color to match the average color value of the histogram with the initial average color value. Note that the color shift correcting part 14 may not be provided. Through the above procedures, the color values and frequencies of the unit colors serving as the elements of a mélange yarn simulation image are obtained. The obtained color values and frequencies can be used as a color spectrum of the mélange yarn, which is then stored in a color spectrum storage 16.

The sampling part 18 performs pre-processing before creating the histogram, and specifies a range of extracting the histogram, with respect to the color image read by the color scanner 6. For example, the colors having extremely large or small brightness in the fabric, except for the rims of the fabric, are eliminated, even when these colors have the color values of the pixels within a sampling range. Such colors are removed in order to eliminate the shadowy parts of the fabric that make the fabric unusually dark, the see-through parts formed between spaces in the fabric, and noise such as other highlighted parts.

A user input 20 is configured by a mouse, a keyboard and the like. A processing program 22 performs sampling before creating the histogram, creates the histogram, extracts the spice colors, merging and color shift correction, and stores a processing program for storing the color spectrum, with respect to the image read by the color scanner 6.

A yarn shape storage 24 stores the yarn shape of a model mélange yarn, the yarn shape being constituted by, for example, a main body part and a fluff part and obtained by twisting fibers at a predetermined pitch. A yarn shape sampling part 26 extracts a model of the yarn shape from an image of mélange yarn when the image can be read by the color scanner 6 or the like. The yarn shape sampling part 26 is used when, for example, the materials of yarn are the same and there is a swatch of a plain-color mélange yarn. Note that the thickness, length and distribution of the fibers, the pitch of the twist and the like can be input by an operator.

A yarn image creating part 28 creates the color image of mélange yarn based on the color spectrum stored in the color spectrum storage 16 and the model of the yarn shape stored in the yarn shape storage 24 or the yarn shape sampling part 26. For example, the unit colors are allocated to the fibers having the yarn main body and fluff part in accordance with the frequencies shown in the color spectrum, preferably the directions of the fibers are inclined at a predetermined pitch, to artificially obtain twisted yarn. In this manner, a color yarn image of mélange yarn can be created. The obtained yarn image is used for simulating garments such as a sweater, a one-piece suit, slacks, gloves, a hat and a swimsuit, apparel products such as a tablecloth and a sheet, or patterned fabrics. Specifically, when there exist knitting data of these garments and apparel products, the color image of mélange yarn that is created by the yarn image creating part 28 is assigned to an individual yarn on the image simulated according to the knitting data. Accordingly, a product in which this mélange yarn is used can be simulated from the sample fabric of mélange yarn.

Reference numeral 32 is a color monitor that is used for displaying the simulation image and specifying the sampling range in the image read by the color scanner 6, and reference numeral 34 is a color printer for outputting a hardcopy of the yarn image of mélange yarn or of the simulation image. Reference numeral 36 is a LAN interface that is used for connecting the image simulation device 2 to a LAN, not shown, and a disk drive 38 is used for inputting/outputting simulation data or the processing program.

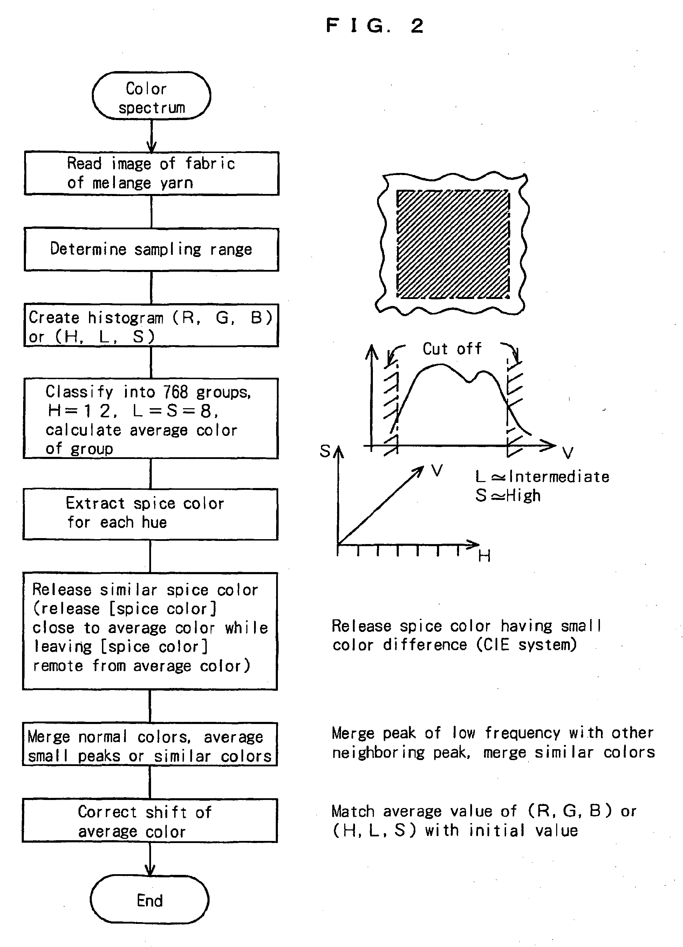

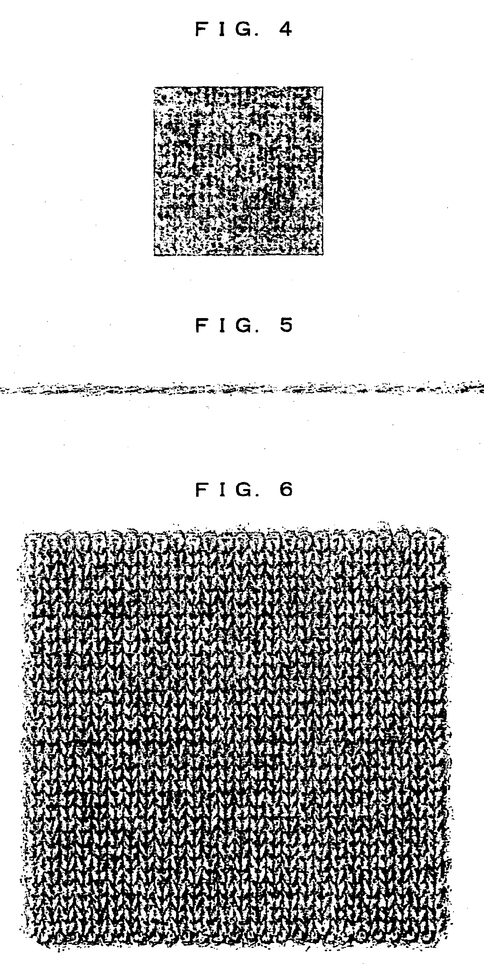

Fig. 2 through Fig. 12 each show the operation of the embodiment. When creating the color spectrum, an image of the sample fabric knitted from mélange yarn shown in, for example, Fig.4, is read by the color scanner, a sampling range is determined using the user input 20 and the color monitor 32, and, at this moment, areas having a brightness of above a predetermined value or other areas having a brightness of the predetermined value or lower are removed from sampled data. Next, the histogram creating part is used to create a histogram for an appropriate color space having RGB, HLS, LAB or LUB, and classify them into predetermined groups. In the classification into groups, the hues are most important to consider, hence it is preferred that the hues be sectioned more frequently than the brightness or saturation. Then, an average color of each group is obtained, and the following processing is performed on the average color of each group. For example, a spice color is extracted for each of the hues divided into twelve. Here, because a spice color is not extracted from a group having an occurrence frequency of 0.04% or less of the entire occurrence frequency, some hues do not have spice colors.

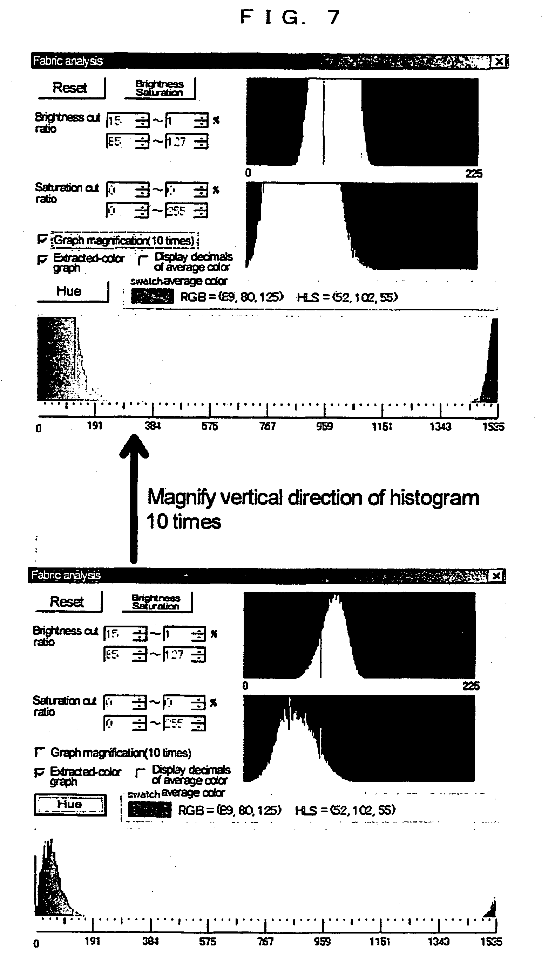

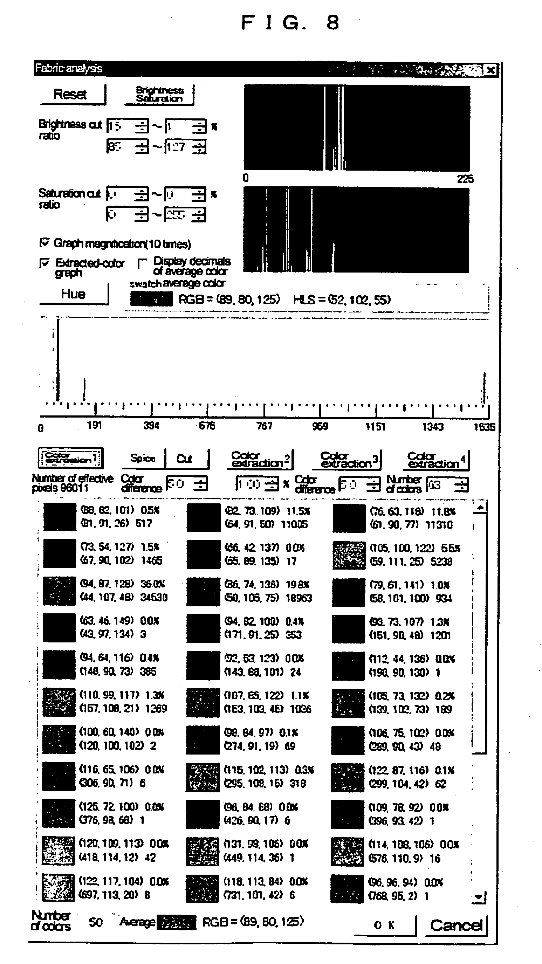

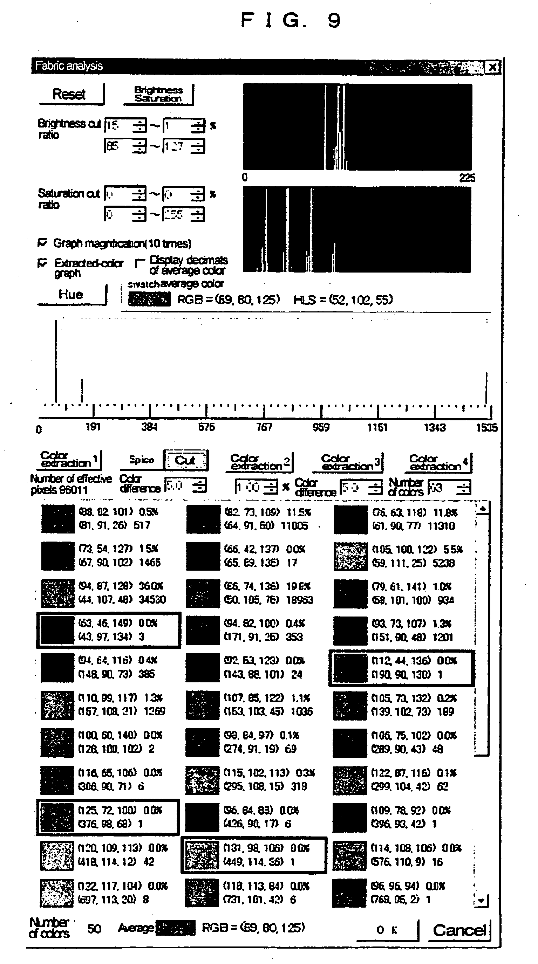

Fig. 7 shows a histogram within the sampling range in relation to the hues. Fig. 8 shows a histogram, which is obtained when dividing the color space into a maximum of 768 groups, in relation to the hues, wherein the histogram appears to be discrete because the average value of each group is used. The RGB value and HLS value of the average color of the histogram are described in the upper part in the middle of Fig. 8. The bottom of Fig. 8 describes that the number of unit colors is fifty, and the number of groups that actually have data out of the 768 sections is fifty. In Fig. 9 the spice colors have already been extracted and boxed, and there are five spice colors and forty-five normal colors in the fifty unit colors, although it is difficult to see in Fig. 9.

When there exit similar spice colors, that is, when there exist two spice colors having a color difference of less than a predetermined value, the spice color whose color value is close to the average color value of the histogram is changed to a normal color. Alternatively, these spice colors may be merged. In this case, the color value obtained after merging these spice colors is the color value of the spice color that is remote from the average color value of the histogram, and the occurrence frequency is the sum of the occurrence frequencies of these merged two spice colors. Similarly, two normal colors or a normal color and a spice color having a small color difference therebetween are merged, and a normal color having an occurrence frequency of, for example, 1% or less is merged with other neighboring normal color or spice color of the color space. When merging the normal colors, thus obtained new color value is defined as, for example, a weighted average of these normal colors, with the weight being the occurrence frequency thereof and when merging a spice color with a normal color the color value of the spice color is kept.

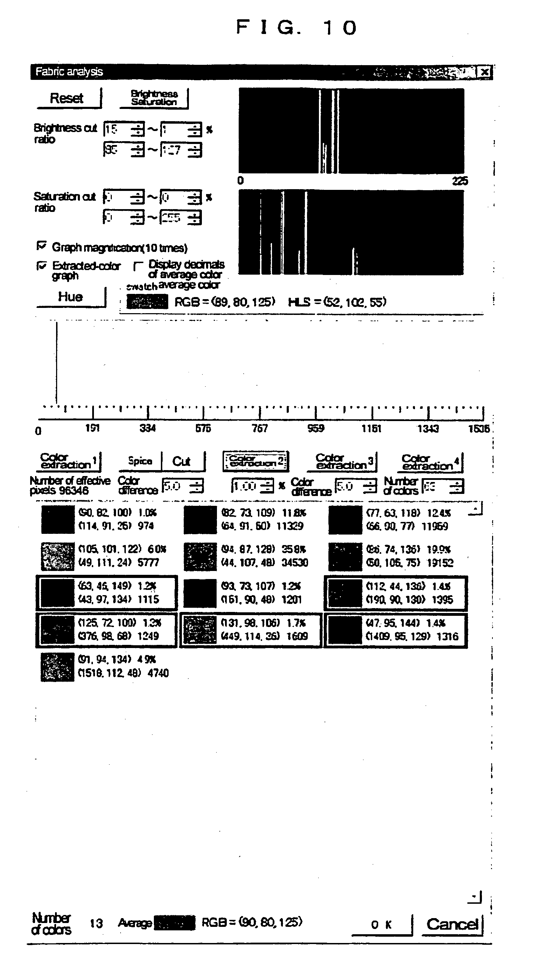

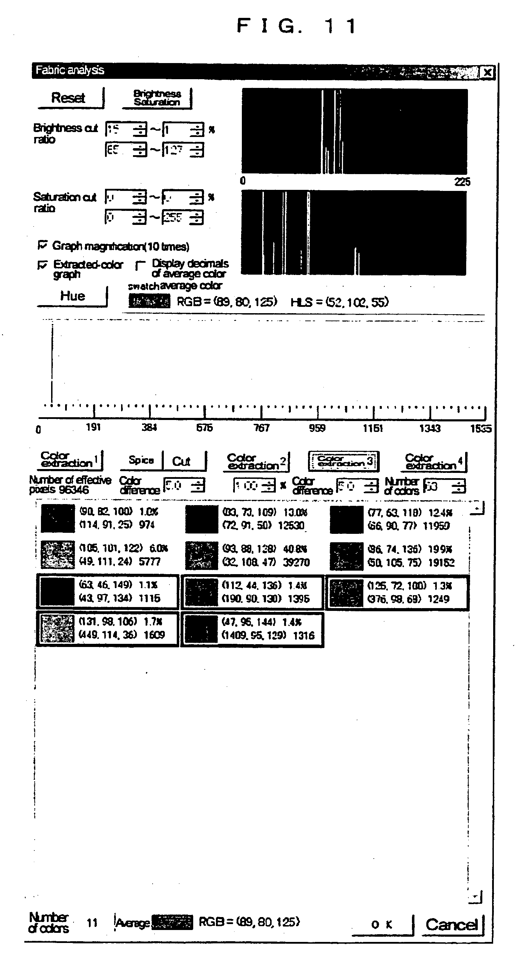

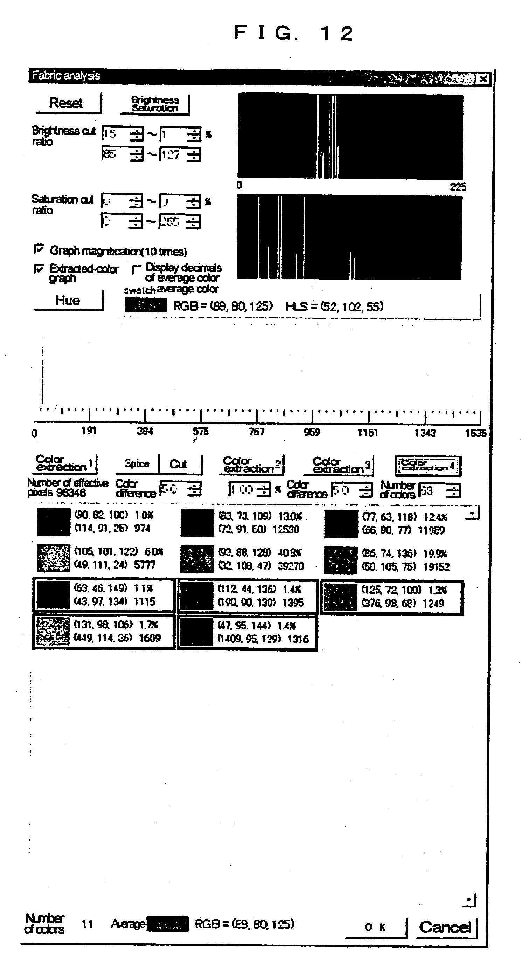

In Fig. 10 normal colors each having an occurrence frequency of less than 1 % are merged, whereby the number of unit colors is reduced to 13. In Fig. 11 similar unit colors having a small color difference therebetween are merged, whereby six normal colors and five spice colors remain. The lower part of each of the drawings shows the average color value of the processed histogram in the form of RGB, and Fig. 10, for example, shows in the upper part thereof that the red value 89 of the average color value of the pre-processed histogram is changed to 90 in the processed histogram. This change is a shift generated in the step of merging unit colors. Subsequent to the processing of Fig. 11, the color value is corrected so that it matches with the average color value of the initial histogram. The corrected color value is shown in Fig. 12. Note in the embodiment that the value with approximately 4 bits after the decimal point is added to each of the RGB and HLS components. Also, in the stage of Fig. 11, the integer portion of the average color value is identical with that of the average color value of the initial histogram, and thus the effect of the shift correction is not shown in Fig. 12.

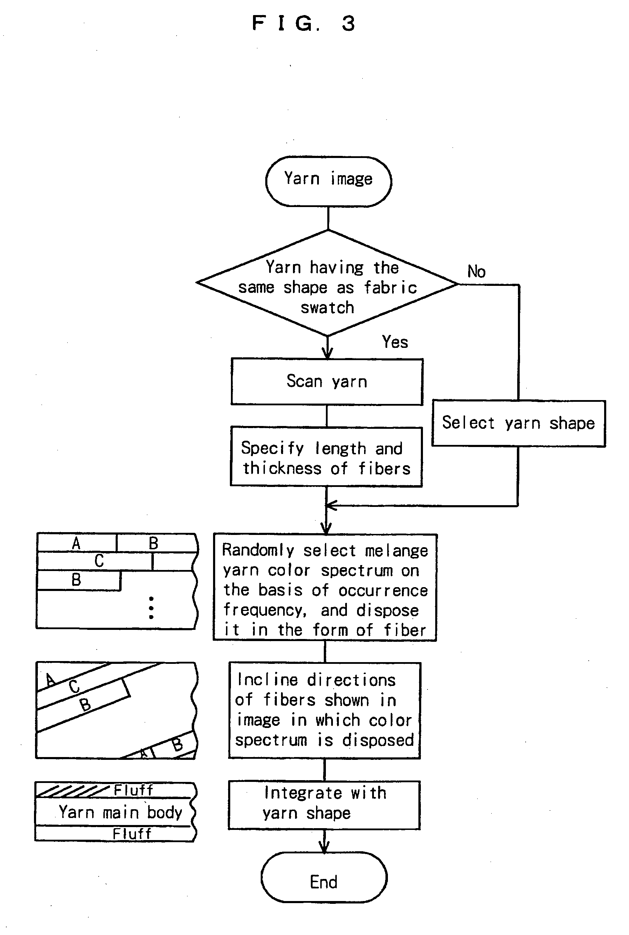

Once the color spectrum is obtained in this manner, the yarn image is created through the procedure shown in Fig. 3. The obtained mélange yarn image is shown in Fig. 5. When there exists mélange yarn having the same shape as the sample fabric, this yarn is scanned to sample a yarn shape configured by the yarn main body and fluff part. Yarn to be used is preferably plain-color yarn, hence when the yarn to be used is multi-color yarn it becomes difficult to sample a yarn shape due to the difference in the colors of the fibers. Next, the operator inputs the length or thickness of the fibers configuring the yarn, or the distribution of the fibers and the pitch of the twist of the yarn. When there is no mélange yarn, the stored yarn shape is selected, at which moment the length or thickness of each fiber and the pitch of the twist also are already stored as part of the yarn shape data.

The color spectrum of the mélange yarn is selected randomly and disposed in the form of an elongated fiber in accordance with the occurrence frequency thereof in the histogram. Then, the directions of the fibers are inclined in accordance with the pitch of the twist so that the yarn protruding upward bends downward. Next, the image in which the color spectrum (color values) is disposed is integrated with the yarn shape, wherein the image of the yarn shape is obtained as a mask, which is superimposed with the image in which the color values are disposed, and the superimposed part is made effective. Fig. 6 shows the image of the fabric that is simulated using the yarn image shown in Fig. 5. Since the fabric is realistic and mélange yarn is used therein, the colors of the stitches are not identical. It is difficult to see the effect of the twist of the yarn in Fig. 6, hence the processing of inclining the directions of the fibers to obtain twisted yarn may be omitted.

The following effects can be obtained in the embodiment:
(1) A yarn image of mélange yarn can be created without unraveling a sample fabric or obtaining the recipe of mélange yarn empirically.
(2) A distinct spice color that strongly affects the colors of the mélange yarn even in a small amount, and a normal color that provides a quiet color tone to the mélange yarn are separated and handled separately.
(3) By merging unit colors, the number of unit colors can be reduced to the level where a yarn image can be created easily.
(4) Shift of a color value that is generated in the step of merging unit colors can be corrected.
(5) The rims of the sample fabric and an unnatural part having extremely high brightness even in the sample fabric do not reflect the yarn image.

## Claims

1. An image simulation device (2) of mélange yarn for creating a color image to simulate mélange yarn from a fabric knitted from the mélange yarn, the image simulation device (2) comprising:
means (6) for reading out a color image of the fabric;
histogram creating means (8) for creating, from the color image, a histogram configured by color values and occurrence frequencies of a plurality of unit colors of a color space;
spice color extracting means (10) for extracting, from the plurality of unit colors of the created histogram, spice colors of medium brightness, high saturation and different hues, and segmenting other unit colors from normal colors;
merging means (12) for merging the normal colors to reduce the number of normal colors, and obtaining a color value and an occurrence frequency of each of the spice colors and a color value and an occurrence frequency of each of the normal colors as a mélange yarn color spectrum; and
yarn image creating means (28) for creating a yarn image of the mélange yarn such that the color values of the spice colors and the normal colors in the mélange yarn color spectrum are displayed in relation to the respective occurrence frequencies thereof and that the color values are disposed in the form of elongated fibers.

2. The image simulation device (2) of mélange yarn according to claim 1, wherein the color space is divided into a plurality of groups, the histogram creating means (8) segments pixels of the color image into the groups, an average value of color values of the pixels belonging to each group is obtained as the unit color, and an occurrence frequency of the unit color is defined based on the number of pixels belonging to each group.

3. The image simulation device (2) of mélange yarn according to claim 2, wherein the merging means (12) merges a less-frequently occurring normal color with other neighboring normal color or spice color within the color space, and merges the normal color with other normal color having a small color difference and similar color value therewith or with a spice color having a small color difference and similar color value therewith.

4. The image simulation device (2) of mélange yarn according to claim 3, wherein the merging means (12) processes two spice colors, which have a small color difference therebetween and similar color values, such as to give priority to the color value of the spice color that is remote from an average color value of the histogram, to reduce the number of spice colors.

5. The image simulation device (2) of mélange yarn according to claim 1, further comprising correction means (14) for obtaining a shift amount by which the average color value of the mélange yarn color spectrum that is obtained by the merging means (12) is shifted from an average color value of the color image, shifting the color values of the spice colors and the normal colors by the shift amount, and matching the average color value of the mélange yarn color spectrum with the average color value of the color image.

6. An image simulation method of mélange yarn, comprising the steps of:
acquiring a color image of a fabric knitted from mélange yarn;
creating, from the color image, a histogram configured by color values and occurrence frequencies of a plurality of unit colors of a color space;
extracting, from the plurality of unit colors of the created histogram, spice colors of medium brightness, high saturation and different hues, and segmenting other unit colors from normal colors;
merging the normal colors to reduce the number of normal colors, and obtaining a color value and an occurrence frequency of each of the spice colors and a color value and an occurrence frequency of each of the normal colors as a mélange yarn color spectrum; and
creating a yarn image of the mélange yarn such that the color values of the spice colors and the normal colors in the mélange yarn color spectrum are displayed in relation to the respective occurrence frequencies thereof and that the color values are disposed in the form of elongated fibers.

7. The image simulation method of mélange yarn according to claim 6, wherein the color space is divided into a plurality of groups,
pixels of the color image are segmented into the groups when creating the histogram, an average value of color values of the pixels belonging to each group is obtained as the unit color, an occurrence frequency of the unit color is defined based on the number of pixels belonging to each group,
a less-frequently occurring normal color is merged with other neighboring normal color or spice color within the color space, and the normal color is merged with other normal color having a small color difference and similar color value therewith or with a spice color having a small color difference and similar color value therewith, when merging the normal colors.

8. An image simulation program (22) of mélange yarn for a device for creating a color image to simulate mélange yarn from a fabric knitted from the mélange yarn, the program (22) comprising:
a histogram creating command to create, from a color image of a fabric knitted from mélange yarn, a histogram configured by color values and occurrence frequencies of a plurality of unit colors of a color space;
a spice color extracting command to extract, from the plurality of unit colors of the created histogram, spice colors of medium brightness, high saturation and different hues, and segment other unit colors from normal colors;
a merging command to merge the normal colors to reduce the number of normal colors, and obtain a color value and an occurrence frequency of each of the spice colors and a color value and an occurrence frequency of each of the normal colors as a mélange yarn color spectrum; and
a yarn image creating command to create a yarn image of the mélange yarn such that the color values of the spice colors and the normal colors in the mélange yarn color spectrum are displayed in relation to the respective occurrence frequencies thereof and that the color values are disposed in the form of elongated fibers.

9. The image simulation program (22) of mélange yarn according to claim 8, wherein
the color space is divided into a plurality of groups,
the histogram creating command segments pixels of the color image into the groups, obtains an average value of color values of the pixels belonging to each group, as the unit color, and defines an occurrence frequency of the unit color based on the number of pixels belonging to each group, and
the merging command merges a less-frequently occurring normal color with other neighboring normal color or spice color within the color space, and merges the normal color with other normal color having a small color difference and similar color value therewith or with a spice color having a small color difference and similar color value therewith.

## Patentansprüche

1. Bildsimulationsvorrichtung (2) für einen Melangefaden zur Erzeugung eines Farbbilds für eine Simulation eines Melangefadens aus einem mit dem Melangefaden gestrickten Gestrick, wobei die Bildsimulationsvorrichtung (2) aufweist:
Mittel (6) zum Auslesen eines Farbbilds des Gestricks,
Histogramm-Erzeugungsmittel (8) zum Erzeugen, aus dem Farbbild, ein Histogramm, das durch Farbwerte und Auftrittshäufigkeiten einer Vielzahl von Einheitsfarben eines Farbraums konfiguriert wird,
Gewürzfarben-Extraktionsmittel (10) zum Extrahieren, aus der Vielzahl von Einheitsfarben des erzeugten Histogramms, von Gewürz- bzw. Zusatzfarben mit einer mittleren Helligkeit, einer hohen Sättigung und verschiedenen Farbtönen, und zum Segmentieren von anderen Einheitsfarben von normalen Farben,
Mischmittel (12) zum Mischen der normalen Farben, um die Anzahl von normalen Farben zu reduzieren, und zum Erhalten eines Farbwerts und einer Auftrittshäufigkeit jeder der Gewürzfarben und eines Farbwerts und einer Auftrittshäufigkeit jeder der normalen Farben als eines Melangefaden-Farbspektrums, und
Fadenbild-Erzeugungsmittel (28) zum Erzeugen eines Fadenbilds des Melangefadens derart, dass die Farbwerte der Gewürzfarben und der normalen Farben in dem Melangefaden-Farbspektrum in Bezug auf die entsprechenden Auftrittshäufigkeiten angezeigt werden, und dass die Farbwerte in der Form von länglichen Fasern angeordnet werden.

2. Bildsimulationsvorrichtung (2) für einem Melangefaden nach Anspruch 1, wobei der Farbraum in eine Vielzahl von Gruppen unterteilt ist, wobei die Histogramm-Erzeugungsmittel (8) Bildpunkte des Farbbilds in die Gruppen segmentieren, wobei ein durchschnittlicher Wert der Farbwerte jedes der zu einer Gruppe gehörenden Bildpunkte als die Einheitsfarbe erhalten wird, und wobei die Auftrittshäufigkeit der Einheitsfarbe basierend auf der Anzahl der zu jeder Gruppe gehörenden Bildpunkte definiert wird.

3. Bildsimulationsvorrichtung (2) für einen Melangefaden nach Anspruch 2, wobei die Mischmittel (12) eine weniger häufig auftretende normale Farbe mit einer benachbarten normalen Farbe oder Gewürzfarbe in dem Farbraum mischen und die normale Farbe mit einer anderen normalen Farbe mit einer kleinen Farbdifferenz und einem ähnlichen Farbwert oder mit einer Gewürzfarbe mit einer kleinen Farbdifferenz und einem ähnlichen Farbwert mischen.

4. Farbsimulationsvorrichtung (2) für einen Melangefaden nach Anspruch 3, wobei die Mischmittel (12) zwei Gewürzfarben mit einer kleinen Farbdifferenz und ähnlichen Farbwerten verarbeiten, um eine Priorität dem Farbwert der Gewürzfarbe zu geben, die fern von einem durchschnittlichen Farbwert des Histogramms ist, um die Anzahl von Gewürzfarben zu reduzieren.

5. Bildsimulationsvorrichtung (2) für einen Melangefaden nach Anspruch 1, die weiterhin Korrekturmittel (14) zum Erhalten einer Verschiebungsgröße aufweist, mit welcher der durch die Mischmittel (12) erhaltene durchschnittliche Farbwert des Melangefaden-Farbspektrums von einem durchschnittlichen Farbwert des Farbbilds verschoben wird, zum Verschieben der Farbwerte der Gewürzfarben und der normalen Farben um die Verschiebungsgröße und zum Abgleichen des durchschnittlichen Farbwerts des Melangefaden-Farbspektrums mit dem durchschnittlichen Farbwert des Farbbilds.

6. Bildsimulationsverfahren für einen Melangefaden, das die folgenden Schritte aufweist:
Erhalten eines Farbbilds eines mit einem Melangefaden gestrickten Gestricks,
Erzeugen, aus dem Farbbild, ein Histogramm, das durch Farbwerte und Auftrittshäufigkeiten einer Vielzahl von Einheitsfarben eines Farbraums konfiguriert wird,
Extrahieren, aus der Vielzahl von Einheitsfarben des erzeugten Histogramms, von Gewürzfarben mit einer mittleren Helligkeit, einer hohen Sättigung und verschiedenen Farbtönen, und Segmentieren von anderen Einheitsfarben von normalen Farben,
Mischen der normalen Farben, um die Anzahl von normalen Farben zu reduzieren, und Erhalten eines Farbwerts und einer Auftrittshäufigkeit jeder der Gewürzfarben und eines Farbwerts und einer Auftrittshäufigkeit jeder der normalen Farben als eines Melangefaden-Farbspektrums, und
Erzeugen eines Fadenbilds des Melangefadens derart, dass die Farbwerte der Gewürzfarben und der normalen Farben in dem Melangefaden-Farbspektrum in Bezug auf die entsprechenden Auftrittshäufigkeiten angezeigt werden und dass die Farbwerte in der Form von länglichen Fasern angeordnet werden.

7. Bildsimulationsverfahren für einen Melangefaden nach Anspruch 6, wobei der Farbraum in eine Vielzahl von Gruppen unterteilt ist,
wobei Bildpunkte des Farbbilds in Gruppen segmentiert werden, wenn das Histogramm erzeugt wird, wobei ein durchschnittlicher Wert der Farbwerte jedes der zu einer Gruppe gehörenden Bildpunkte als die Einheitsfarbe erhalten wird und wobei die Auftrittshäufigkeit der Einheitsfarbe basierend auf der Anzahl der zu jeder Gruppe gehörenden Bildpunkte definiert wird,
wobei eine weniger häufig auftretende normale Farbe mit einer benachbarten normalen Farbe oder Gewürzfarbe in dem Farbraum gemischt wird und die normale Farbe mit einer anderen normalen Farbe mit einer kleinen Farbdifferenz und einem ähnlichen Farbwert oder mit einer Gewürzfarbe mit einer kleinen Farbdifferenz und einem ähnlichen Farbwert gemischt wird, wenn die normalen Farben gemischt werden.

8. Bildsimulationsproramm (22) für einen Melangefaden zur Erzeugung eines Farbbilds für eine Simulation eines Melangefadens aus einem mit dem Melangefaden gestrickten Gestrick, wobei das Bildsimulationsprogramm (22) aufweist:
einen Histogramm-Erzeugungsbefehl zum Erzeugen, aus einem Farbbild eines mit dem Melangefaden gestrickten Gestricks, eines Histogramms, das durch Farbwerte und Auftrittshäufigkeiten einer Vielzahl von Einheitsfarben eines Farbraums konfiguriert wird,
einen Gewürzfarben-Extraktionsbefehl zum Extrahieren, aus der Vielzahl von Einheitsfarben des erzeugten Histogramms, von Gewürzfarben mit einer mittleren Helligkeit, einer hohen Sättigung und verschiedenen Farbtönen, und zum Segmentieren von anderen Einheitsfarben von normalen Farben,
einen Mischbefehl zum Mischen der normalen Farben, um die Anzahl von normalen Farben zu reduzieren, und zum Erhalten eines Farbwerts und einer Auftrittshäufigkeit jeder der Gewürzfarben und eines Farbwerts und einer Auftrittshäufigkeit jeder der normalen Farben als eines Melangefaden-Farbspektrums, und
einen Fadenbild-Erzeugungsbefehl zum Erzeugen eines Fadenbilds des Melangefadens derart, dass die Farbwerte der Gewürzfarben und der normalen Farben in dem Melangefaden-Farbspektrum in Bezug auf die entsprechenden Auftrittshäufigkeiten angezeigt werden, und dass die Farbwerte in der Form von länglichen Fasern angeordnet werden.

9. Bildsimulationsprogramm (22) für einen Melangefaden nach Anspruch 8, wobei
der Farbraum in eine Vielzahl von Gruppen unterteilt ist,
der Histogramm-Erzeugungsbefehl Bildpunkte des Farbbilds in Gruppen segmentiert, einen durchschnittlichen Wert der Farbwerte jedes der zu einer Gruppe gehörenden Bildpunkte als die Einheitsfarbe erhält und die Auftrittshäufigkeit der Einheitsfarbe basierend auf der Anzahl der zu jeder Gruppe gehörenden Bildpunkte definiert, und
der Mischbefehl eine weniger häufig auftretende normale Farbe mit einer benachbarten normalen Farbe oder Gewürzfarbe in dem Farbraum mischt und die normale Farbe mit einer anderen normalen Farbe mit einer kleinen Farbdifferenz und einem ähnlichen Farbwert oder mit einer Gewürzfarbe mit einer kleinen Farbdifferenz und einem ähnlichen Farbwert mischt.

## Revendications

1. Dispositif de simulation d'image (2) de fil chiné pour créer une image en couleur pour simuler du fil chiné à partir d'un tissu tricoté avec le fil chiné, le dispositif de simulation d'image (2) comprenant :
des moyens (6) pour lire une image en couleur du tissu ;
des moyens de création d'histogramme (8) pour créer, à partir de l'image en couleur, un histogramme configuré par des valeurs de couleur et des fréquences d'occurrence d'une pluralité de couleurs élémentaires d'un espace colorimétrique ;
des moyens d'extraction de couleurs épicées (10) pour extraire, de la pluralité de couleurs élémentaires de l'histogramme créé, des couleurs épicées d'intensité moyenne, de saturation élevée et de teintes différentes, et segmenter d'autres couleurs élémentaires à partir de couleurs normales ;
des moyens de fusionnement (12) pour fusionner les couleurs normales pour réduire le nombre de couleurs normales, et obtenir une valeur de couleur et une fréquence d'occurrence de chacune des couleurs épicées et une valeur de couleur et une fréquence d'occurrence de chacune des couleurs normales en tant que spectre de couleur de fil chiné ; et
des moyens de création d'image de fil (28) pour créer une image de fil du fil chiné de telle sorte que les valeurs de couleur des couleurs épicées et des couleurs normales dans le spectre de couleur de fil chiné sont affichées en relation avec leurs fréquences d'occurrence respectives et de telle sorte que les valeurs de couleur sont disposées sous forme de fibres allongées.

2. Dispositif de simulation d'image (2) de fil chiné selon la revendication 1, dans lequel l'espace colorimétrique est divisé en une pluralité de groupes, les moyens de création d'histogramme (8) segmentent des pixels de l'image en couleurs dans les groupes, et la valeur moyenne de valeurs de couleur des pixels appartenant à chaque groupe est considérée comme couleur élémentaire, et une fréquence d'occurrence de la couleur élémentaire est définie sur la base du nombre de pixels appartenant à chaque groupe.

3. Dispositif de simulation d'image (2) de fil chiné selon la revendication 2, dans lequel les moyens de fusionnement (12) fusionnent une couleur normale à occurrence moins fréquente avec une autre couleur normale voisine ou une couleur épicée dans l'espace colorimétrique, et fusionnent la couleur normale avec une autre couleur normale ayant une petite différence de couleur et une valeur de couleur similaire ou avec une couleur épicée ayant une petite différence de couleur et une valeur de couleur similaire.

4. Dispositif de simulation d'image (2) de fil chiné selon la revendication 3, dans lequel les moyens de fusionnement (12) traitent deux couleurs épicées, qui ont une petite différence de couleur entres elles et des valeurs de couleur similaires, de façon à donner la priorité à la valeur de couleur de la couleur épicée qui est éloignée d'une valeur de couleur moyenne de l'histogramme, pour réduire le nombre de couleurs épicées.

5. Dispositif de simulation d'image (2) de fil chiné selon la revendication 1, comprenant en outre des moyens de correction (14) pour obtenir une quantité de décalage de laquelle la valeur de couleur moyenne du spectre de couleur de fil chiné qui est obtenue par les moyens de fusionnement (12) est décalée par rapport à la valeur de couleur moyenne de l'image en couleur, pour décaler les valeurs de couleur des couleurs épicées et des couleurs normales de la quantité de décalage, et pour faire concorder la valeur de couleur moyenne du spectre de couleur de fil chiné avec la valeur de couleur moyenne de l'image en couleur.

6. Procédé de simulation d'image de fil chiné comprenant les étapes suivantes :
acquérir une image en couleur d'un tissu tricoté avec du fil chiné ;
créer, à partir de l'image en couleur, un histogramme configuré par des valeurs de couleur et des fréquences d'occurrence d'une pluralité de couleurs élémentaires d'un espace colorimétrique ;
extraire, de la pluralité de couleurs élémentaires de l'histogramme créé, des couleurs épicées d'intensité moyenne, de saturation élevée et de différentes teintes, et segmenter d'autres couleurs élémentaires à partir de couleurs normales ;
fusionner les couleurs normales pour réduire le nombre de couleurs normales, et obtenir une valeur de couleur et une fréquence d'occurrence de chacune des couleurs épicées et une valeur de couleur et une fréquence d'occurrence de chacune des couleurs normales en tant que spectre de couleur de fil chiné ; et
créer une image de fil du fil chiné de telle sorte que les valeurs de couleur des couleurs épicées et des couleurs normales dans le spectre de couleur de fil chiné sont affichées en relation avec leurs fréquences d'occurrence respectives et de telle sorte que les valeurs de couleur sont disposées sous la forme de fibres allongées.

7. Procédé de simulation d'image de fil chiné selon la revendication 6, dans lequel l'espace colorimétrique est divisé en une pluralité de groupes,
des pixels de l'image en couleur sont segmentés dans les groupes lors de la création de l'histogramme, et la valeur moyenne des valeurs de couleur des pixels appartenant à chaque groupe est obtenue en tant que couleur élémentaire, et une fréquence d'occurrence de la couleur élémentaire est définie sur la base du nombre de pixels appartenant à chaque groupe,
une couleur normale à occurrence moins fréquente est fusionnée avec une autre couleur normale voisine ou une couleur épicée dans l'espace colorimétrique, et la couleur normale est fusionnée avec une autre couleur normale ayant une petite différence de couleur et une valeur de couleur similaire ou avec une couleur épicée ayant une petite différence de couleur et une valeur de couleur similaire, lors de la fusion des couleurs normales.

8. Programme de simulation d'image (22) de fil chiné pour un dispositif destiné à créer une image en couleur pour simuler du fil chiné à partir d'un tissu tricoté avec le fil chiné, le programme (22) comprenant :
une commande de création d'histogramme pour créer, à partir d'une image en couleur d'un tissu tricoté avec le fil chiné, un histogramme configuré par des valeurs de couleur et des fréquences d'occurrence de couleurs élémentaires d'un espace colorimétrique ;
une commande d'extraction de couleurs épicées pour extraire, de la pluralité de couleurs élémentaires de l'histogramme créé, des couleurs épicées d'intensité moyenne, de saturation élevée et de teintes différentes, et segmenter d'autres couleurs élémentaires à partir de couleurs normales ;
une commande de fusionnement pour fusionner les couleurs normales pour réduire le nombre de couleurs normales, et obtenir une valeur de couleur et une fréquence d'occurrence de chacune des couleurs épicées et une valeur de couleur et une fréquence d'occurrence de chacune des couleurs normales sous forme d'un spectre de couleur de fil chiné ; et
une commande de création d'image de fil pour créer une image de fil du fil chiné de telle sorte que les valeurs de couleur des couleurs épicées et des couleurs normales dans le spectre de couleur de fil chiné sont affichées en relation avec leurs fréquences d'occurrence respectives et que les valeurs de couleur sont disposées sous forme de fibres allongées.

9. Programme de simulation d'image (22) de fil mélangé selon la revendication 8, dans lequel
l'espace colorimétrique est divisé en une pluralité de groupes,
la commande de création d'histogramme segmente des pixels de l'image en couleur dans les groupes, obtient une valeur moyenne de valeurs de couleur des pixels appartenant à chaque groupe, en tant que couleur élémentaire, et définit une fréquence d'occurrence de la couleur élémentaire sur la base du nombre de pixels appartenant à chaque groupe, et
la commande de fusionnement fusionne une couleur normale à occurrence moins fréquente avec une autre couleur normale voisine ou une couleur épicée dans l'espace colorimétrique, et fusionne la couleur normale avec une autre couleur normale ayant une petite différence de couleur et une valeur de couleur similaire ou avec une couleur épicée ayant une petite différence de couleur et une valeur de couleur similaire par rapport à celle-ci.
